# EUROPÄISCHE PATENTSCHRIFT

(11) **EP 3 431 928 B1**
(45) Veröffentlichungstag und Bekanntmachung des Hinweises auf die Patenterteilung: **22.05.2024**
(21) Anmeldenummer: 18184930.8
(22) Anmeldetag: 23.07.2018
(51) Int. Cl.: G01C 21/20, G01C 21/36, G06Q 50/00, G09B 29/10, H04W 4/02

(54) **VERFAHREN ZUM BESTIMMEN DER RELATIVEN POSITIONEN MINDESTENS ZWEIER MOBILER ENDGERÄTE ZUEINANDER**
METHOD FOR DETERMINING THE RELATIVE POSITIONS OF AT LEAST TWO MOBILE TERMINAL DEVICES TO EACH OTHER
PROCÉDÉ POUR DÉTERMINER LES POSITIONS RELATIVES D'AU MOINS DEUX DISPOSITIFS TERMINAUX MOBILES L'UN PAR RAPPORT À L'AUTRE

(30) Priorität: 21.07.2017 DE 102017006849
(43) Veröffentlichungstag der Anmeldung: 23.01.2019
(73) Patentinhaber: Heindl, Lukas, 82166 Gräfelfing (DE)
(72) Erfinder: Heindl, Lukas, 82166 Gräfelfing (DE)
(74) Vertreter: Weigel, Matthias

(56) Entgegenhaltungen:
- EP-B1- 1 808 673
- WO-A1-2014/183208
- US-A1- 2014 113 660
- US-B2- 9 277 359
- Thsoft Co ET AL: "Distance between devices - Apps on Google Play", , 17 June 2014 (2014-06-17), XP55753817, Retrieved from the Internet: URL:https://play.google.com/store/apps/det ails?id=com.thsoft.rnb&hl=en_US&gl=US [retrieved on 2020-11-25]
- Doitfordummies: ""FIND MY FRIENDS": How to Locate Friends on iPhone, iPad, iPod", , 8 April 2013 (2013-04-08), XP055876369, Retrieved from the Internet: URL:https://www.youtube.com/watch?v=HHgDf0 kzTVg [retrieved on 2022-01-05]

## Beschreibung

Die Erfindung betrifft ein Verfahren zum Bestimmen der relativen Positionen mindestens zweier mobiler Endgeräte, wie Mobiltelefone, Tablet-Computer, PDAs, Notebooks, Subnotebooks, und ähnlicher mobiler Endgeräte, zueinander.

Häufig besteht das Problem, dass sich Personen an unübersichtlichen oder unbekannten Orten oder im Freien verabreden und trotzt moderner Kommunikationsmöglichkeiten erst nach geraumer Zeit zueinander finden oder sich sogar verpassen.

Üblicherweise versuchen die miteinander verabredeten Personen mit Hilfe mobiler Endgeräte, wie Mobiltelefonen, Tablet-Computern, PDAs, Notebooks, Subnotebooks, und ähnlichen mobilen Endgeräten, beispielsweise per Telefonie, SMS oder vergleichbaren Nachrichtendiensten, miteinander zu kommunizieren, um sich gegenseitig zu einem vereinbarten Treffpunkt zu leiten.

Aus der WO 2014/183208 ist ein Verfahren bekannt, das dem Nutzer eines mobilen Endgerätes nach einer bestätigten Positionsanfrage den aktuellen Standort eines angefragten mobilen Endgerätes eines anderen Nutzers in einer Umgebungskarte anzeigt. Bei diesem bekannten Verfahren werden weder die relativen Positionen der Endgeräte zueinander bestimmt noch in jedem Endgerät eine relative Positionsangabe zum jeweils anderen Endgerät angezeigt.

Das US-Patent US 9,277,359 B2 offenbart ein Kommunikationssystem, bei dem mehrere mobile Endgeräte zu einer Kommunikationsgruppe zusammengefasst sind. Das System erfasst die Standorte sämtlicher Endgeräte der Kommunikationsgruppe, wobei die relativen Abstände zwischen den Endgeräten bestimmt werden. In der Anzeige eines vorbestimmten Endgerätes, genannt "primary mobile device", wird für jedes Endgeräte der Kommunikationsgruppe ein Icon/Avatar sowie die Richtung und der ungefähre Abstand zum vorbestimmten Endgerät angezeigt.

In der US 2014/0113660 A1 ist ein Verfahren beschrieben, bei dem die elektronische Version eines Umgebungsplans auf ein anfragendes Endgerät von einem Nutzer geladen wird. In diesem elektronischen Umgebungsplane sind fest vorgegebene geographische Positionen vorgegebener Orte und Einrichtungen, wie Restaurants, Geschäften, etc., abgelegt. Basierend auf der aktuellen geographischen Position des anfragenden Endgerätes und den fest vorgegebenen geographischen Positionen werden dann die relativen Positionen des anfragenden Endgerätes zu den verschiedenen Orten und Einrichtungen im Umgebungsplan bestimmt und deren Entfernung und Richtung zum Endgerät in diesem anzeigt. Aus der EP 1 808 673 A1 ist ein Verfahren bekannt, bei dem die relativen Positionen zwischen mindestens zwei über ein Mobilfunknetz miteinander kommunizierenden mobilen Endgeräten bestimmt werden und auf Basis der zuvor bestimmten, relativen Positionen in jedem der beiden mobilen Endgeräte als Positionsangabe eine relative Entfernung in Form eines Entfernungswertes und eine geographische Richtung zum jeweils anderen mobilen Endgerät angezeigt wird.

Aufgabe der Erfindung ist es nun, ein Verfahren anzugeben, mit dem auf einfache Weise nach einer bestätigten Positionsanfrage sowohl im anfragenden als auch im angefragten Endgerät eine relative Positionsangabe zum jeweils anderen Endgerätangezeigt wird.

Zur Lösung dieser Aufgabe schlägt die Erfindung ein Verfahren mit den Merkmalen gemäß Anspruch 1 vor.

Bei dem erfindungsgemäßen Verfahren wird auf einfach und elegante Weise der Nutzer mit Hilfe seines mobilen Endgerätes sehr gezielt darüber informiert, in welche Richtung er sich bewegen muss und wie groß der Abstand zu der von ihm durch das Endgerät angesprochenen Person noch ist.

Zu diesem Zweck wird vorgeschlagen, dass der Nutzer mit Hilfe seines Endgerätes zunächst eine Anfrage an das Endgerät des anderen Nutzers sendet. Stimmt der Nutzer des angesprochenen anderen mobilen Endgerätes der Positionsanfrage zu, werden die aktuellen geographischen Positionen der beiden Endgeräte ermittelt und auf Basis dieser aktuellen geographischen Positionen, die relativen Positionen der beiden Endgeräte zueinander bestimmt. Unter dem Begriff "relative Positionen" werden im vorliegenden Fall Daten, wie geographische Koordinaten, verstanden, die eine eindeutige räumliche Zuordnung der beiden Endgeräte zueinander ermöglichen.

Die aktuellen geographischen Positionen der mobilen Endgeräte werden an eine Datenbank übermittelt, in der die relativen Positionen auf Basis der aktuellen geographischen Positionen der Endgeräte durch Algorithmen rechnerisch bestimmt und die relativen Positionen an das anfragende mobile Endgerät und gegebenenfalls an das mindestens eine angefragte mobile Endgerät übermittelt werden.

Basierend auf diesen relativen Positionen wird dann entweder von einer auf dem Endgerät gespeicherten Software oder aber von einem Drittanbieter, der Datenbank oder ähnlichem, als Positionsangabe eine Relativentfernung des anfragenden Endgerätes zu dem angefragten Endgerät sowie eine geographische Richtung, beispielsweise in Form einer Himmelsrichtung, in Form einer Kompassnadel oder ähnlichem, auf dem anfragenden Endgerät angezeigt. Ferner wird basierend auf den relativen Positionen der mobilen Endgeräte zueinander auch beim jeweils angefragten mobilen Endgerät eine Positionsangabe in Form einer relativen Entfernung und einer entgegengesetzten geographischen Richtung zum anfragenden mobilen Endgerät anzugeben. Der Nutzer des anfragenden Endgerätes kann dann dem ihn angezeigten Positionsangaben folgen.

Dabei macht das erfindungsgemäße Verfahren von dem bestehenden Mobilfunknetz gebrauch, in dem die Positionsanfrage des anfragenden mobilen Endgerätes über das Mobilfunknetz an das angefragte mobile Endgerät übermittelt wird.

Um die Nutzer möglichst präzise leiten zu können, werden die relativen Positionen der Endgeräte zueinander in regelmäßigen oder unregelmäßigen zeitlichen Abständen erneut bestimmt und als aktualisierte Positionsangaben auf dem Endgerät angezeigt. Alternativ oder ergänzt hierzu kann der Nutzer gegebenenfalls auch aktiv mit Hilfe seines Endgerätes eine Aktualisierung der Positionsangaben anfordern.

Sobald die relativen Positionen der Endgeräte zumindest annähernd deckungsgleich sind, ist das Verfahren abgeschlossen und eine entsprechende Information auf dem Endgerät angezeigt.

Lehnt der andere Nutzer dagegen die Positionsanfrage ab, endet die Kommunikation. Dabei ist zu bemerken, dass die Ablehnung entweder aktiv vom Nutzer bei Anfrage erfolgt. Alternativ kann der Nutzer jedoch auch, beispielsweise zeit- oder personenabhängig, in seinem Endgerät oder aber auch in einer zentralen Datenbank vorgeben, wann bzw. gegenüber wem eine Positionsanfrage ablehnt wird.

Weitere Vorteile der Erfindung ergeben sich aus der nachfolgenden Beschreibung, den Unteransprüchen und den Zeichnungen.

Gemäß einer besonders bevorzugten Variante soll das erfindungsgemäße Verfahren auch zur Positionsbestimmung mehrerer mobiler Endgeräte eingesetzt werden. Hierzu wird vorgeschlagen, die beiden mobilen Endgeräte mit mindestens einem weiteren mobilen Endgerät in einer Datenbank als gemeinsame Kommunikationsgruppe zu erfassen. Der Nutzer des anfragenden mobilen Endgerätes wählt dann eines oder mehrere mobile Endgeräte aus der Kommunikationsgruppe zur gleichzeitigen Übermittlung von Positionsanfragen aus. Nach Übermittlung der Positionsanfragen an alle ausgewählten mobilen Endgeräte werden für diejenigen Endgeräte, deren Nutzer die Positionsanfrage jeweils bestätigen, die relativen Positionen der jeweils bestätigenden mobilen Endgeräte und dem anfragenden mobilen Endgerät zueinander beim anfragenden Endgerät relative Entfernungen und geographischen Richtungen angegeben.

Durch Bildung einer Kommunikationsgruppe ist es möglich, den Kreis der Nutzer, die angesprochen werden sollen, vorab zu definieren, so dass Positionsanfragen nur an Mitglieder der Kommunikationsgruppe übermittelt werden. Die Kommunikationsgruppe kann dabei entweder individuell für einen bestimmten Anlass, beispielsweise einen Konzertbesuch, definiert werden. Es ist jedoch auch denkbar, die Kommunikationsgruppe für einen längeren Zeitraum zu definieren, beispielsweise im Sinne einer Gruppe von Freunden oder Bekannten, oder um das erfindungsgemäße Verfahren beispielsweise für wiederkehrende Ereignisse mit denselben Teilnehmern zu nutzen.

Dies ist insbesondere dann von Vorteil, wenn mehrere Personen in einer gemeinsamen Kommunikationsgruppe erfasst sind und der anfragende Nutzer in seiner geographischen Position verharrt, während die anderen angefragten Nutzer geleitet durch die auf den Endgeräten jeweils gezeigten Positionsangaben zum anfragenden Nutzer geführt werden.

Ferner ist es von Vorteil, wenn bei jedem an der Positionsanfrage beteiligten mobilen Endgerät, dessen Nutzer die Anfrage bestätigt hat, basierend auf den aktuellen geographischen Positionen jedes an der Positionsanfrage beteiligten mobilen Endgerätes die relativen Entfernungen und geographischen Richtungen aller an der Positionsanfrage beteiligten mobilen Endgeräte angezeigt werden. Mit anderen Worten erhält jedes an der Positionsanfrage beteiligte Endgerät Positionsangaben über alle anderen beteiligten Endgeräte. Auf diese Weise ist es möglich, dass die Nutzer koordiniert aufeinander zugeleitet werden und sich an einem gemeinsamen Treffpunkt treffen können. Dabei ist es von besonderem Vorteil, wenn die Positionsangaben kontinuierlich aktualisiert werden.

Die aktuellen geographischen Positionen der an der Positionsanfrage beteiligten mobilen Endgeräte wird vorzugsweise mit Hilfe eines GPS-Systems oder mit Hilfe der Mobilfunkzellen eines Mobilfunknetzbetreibers ermittelt. Insbesondere bei Freiluftveranstaltungen wie Open-Air-Konzerten, bietet sich die Ermittlung der geographischen Positionen mit Hilfe des GPS-Systems an, da hier vergleichsweise exakte Positionsbestimmungen auf einfache Weise möglich sind. Ferner sind die heutigen mobilen Endgeräte üblicherweise mit GPS-Empfängern ausgestattet, so dass lediglich eine Aktivierung dieser Funktion in den Endgeräten notwendig ist. Die Bestimmung der relativen Positionen der Endgeräte zueinander erfolgt dann in der Datenbank.

Insbesondere, wenn mehrere mobile Endgeräte miteinander kommunizieren, ist es von Vorteil, wenn die Endgeräte über einen gemeinsamen Kommunikationspunkt miteinander die erforderlichen Daten austauschen.

Um eine gewisse Privatsphäre sicherzustellen, wird bei einer besonders bevorzugten Variante des erfindungsgemäßen Verfahrens vorgeschlagen, dass die Positionsanfrage eines anderen Nutzers von dem Nutzer des angefragten mobilen Endgerätes abgelehnt werden kann. Dieses aktive Ablehnen ist insbesondere dann von Vorteil, wenn der angefragte Nutzer eine Kontaktaufnahme nicht wünscht. Diese Ablehnung von Positionsanfragen kann gegebenenfalls auch für bestimmte Personen und/oder Zeiträume fest vorgegeben und im Endgeräte und/oder in der Datenbank abgelegt sein.

Bei einer besonders bevorzugten Ausführungsform des erfindungsgemäßen Verfahrens wird vorgeschlagen, in mindestens einer Datenbank die Endgeräte aller Nutzer des Verfahrens gemeinsam mit jedem Endgerät jeweils zugeordneten individuellen, nutzerbezogenen Datenbank zu erfassen. Zu diesem Zweck muss der jeweilige Nutzer in der Datenbank ein Nutzerkonto (Account) anlegen, in dem der Nutzer neben seinen Kommunikationsdaten, wie Mobilfunknummer, auch individuelle, personenbezogene Daten ablegen muss bzw. kann. Wichtig ist, dass zumindest mit den im Nutzerkonto abgespeicherten Daten eine eindeutige Positionsbestimmung des Endgerätes möglich ist.

Die Endgeräte und/oder die Nutzer sind in der Datenbank individuellen Kommunikationsgruppen zugeordnet, welche von den Nutzern selbst und/oder von dem Betreiber der Datenbank gebildet und bei dem Positionsanfragen nur innerhalb der Kommunikationsgruppe zugelassen werden.

Vorzugsweise werden bei dieser Variante des erfindungsgemäßen Verfahrens auf jedem Endgerät jedes Nutzers einer gemeinsamen Kommunikationsgruppe zu Beginn der Positionsanfrage alle Endgeräte der Nutzer der gemeinsamen Kommunikationsgruppe zur Auswahl angezeigt. Die Anzeige zur Auswahl der Nutzer der gemeinsamen Kommunikationsgruppe kann beispielsweise in Form einer zu durchblätternden Liste erfolgen, wobei zusätzliche Informationen, wie der Name oder ein Bild des Nutzers, angezeigt werden. Ferner ist auch denkbar, dass in der Auflistung angezeigt wird, welcher Nutzer verfügbar ist und/oder welcher Nutzer eine Positionsanfrage wünscht oder ablehnt.

Der Nutzer wählt dann aus der angezeigten Kommunikationsgruppe die anzufragenden Endgeräte und/oder Nutzer aus. Nach der Auswahl wird dann, vorzugsweise durch einmaliges Auslösen, an alle ausgewählten anzufragenden Endgeräte eine Positionsanfrage übermittelt.

Ferner wird vorgeschlagen, neben der Positionsanfrage eine Kommunikationsfunktion vorgesehen ist, durch die die in der Datenbank, vorzugsweise in einer gemeinsamen Kommunikationsgruppe erfassten Endgeräte zur Übertragung von Informationen, Textnachrichten, Bild-, Ton- und/oder Videodateien miteinander kommunizieren können. Hierdurch können die Nutzer einer Kommunikationsgruppe gegebenenfalls auch ohne Positionsanfrage miteinander kommunizieren (chatten) und Neuigkeiten miteinander austauschen. Die zusätzliche Kommunikationsfunktion bietet jedoch auch Drittanbietern oder dem Datenbankbetreiber die Möglichkeit die Nutzer der Endgeräte gezielt anzusprechen und zu informieren.

Das erfindungsgemäße Verfahren kann, sofern gewünscht, auch auf Endgeräte beschränkt sein, die in der Datenbank einer Kommunikationsgruppe von Endgeräten zugeordnet sind, und bei dem Positionsanfragen nur innerhalb der Kommunikationsgruppe zugelassen werden. In einem derartigen Fall ist es von besonderem Vorteil, wenn ein weiteres Endgerät nur nach Einladung durch mindestens einen Nutzer, gegebenenfalls auch nur nach Zustimmung durch die anderen Nutzer der in der Kommunikationsgruppe erfassten mobilen Endgeräte, der Kommunikationsgruppe zugeordnet werden kann.

Nachfolgend wird die Erfindung anhand zweiter Ausführungsbeispiele unter Bezugnahme auf die Zeichnung näher erläutert. Darin zeigt:
- Fig. 1: eine schematische Darstellung zweier mobiler Endgeräte, deren relative Positionen zueinander mit Hilfe eines Satelliten unter Anwendung einer ersten Variante des erfindungsgemäßen Verfahrens ermittelt werden,
- Fig. 2: eine vergrößerte Darstellung eines der beiden mobilen Endgeräte aus Fig. 1, auf dessen Touchscreen Positionsangaben angezeigt sind, und
- Fig. 3: eine schematische Darstellung dreier mobiler Endgeräte, deren Positionsangaben mit Hilfe einer Datenbank unter Anwendung einer zweiten Variante des erfindungsgemäßen Verfahrens ermittelt werden.

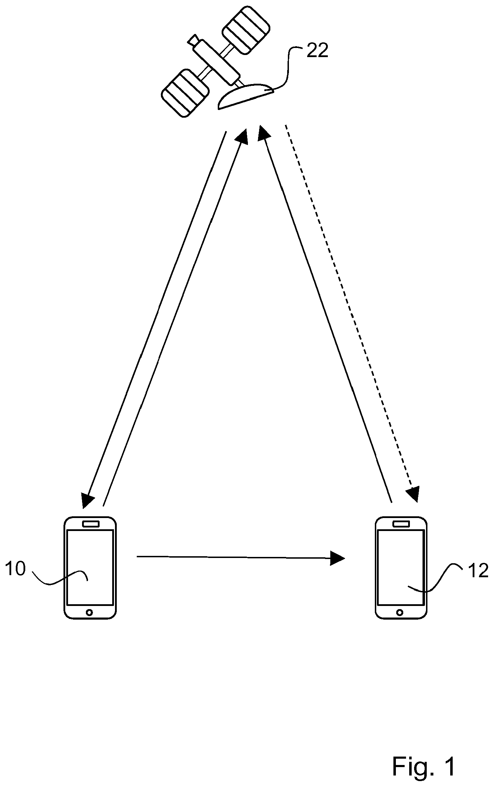

Fig. 1 zeigt in schematischer Darstellung zwei mobile Endgeräte 10 und 12, beispielsweise zwei sogenannte Smartphones. Die beiden Endgeräte 10 und 12 kommunizieren in herkömmlicher Weise über das nicht näher gezeigte Mobilfunknetz miteinander.

Beide Endgeräte 10 und 12 sind mit einer Software ausgestattet, die entsprechend einer ersten Variante des erfindungsgemäßen Verfahrens arbeitet.

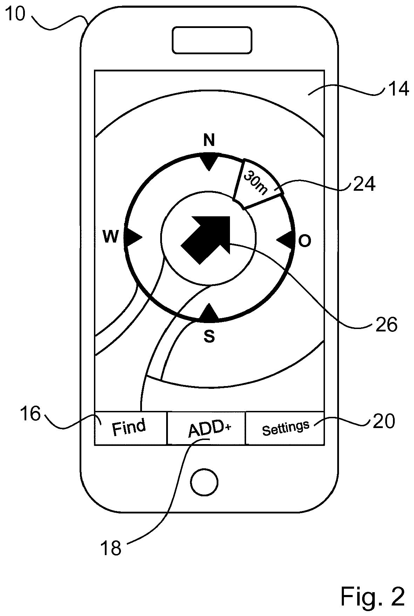

In Fig. 2 ist die mit einem Touchscreen ausgestattete Vorderseite des Endgerätes 10 dargestellt. Im unteren Bereich des Touchscreens 14 sind mehrere Betätigungsfelder 16, 18 und 20 eingeblendet, die mit verschiedenen Bezeichnungen "Find", "ADD+" und "Settings" bezeichnet sind.

Der Nutzer des Endgerätes 10 stellt mit Hilfe seines Endgerätes 10 eine gezielte Positionsanfrage an das Endgerät 12 des anderen Nutzers. Dies geschieht durch Betätigen des auf dem Touchscreen 14 seines Endgerätes 10 mit "Find" eingeblendeten Betätigungsfeldes 16. Sobald der Nutzer das Betätigungsfeld 16 "Find" aktiviert, öffnet eine nicht näher gezeigte Liste, in der alle aktiven Kommunikationsgruppen angezeigt sind, in welcher der Nutzer als Mitglied erfasst ist. Nach Auswahl einer Kommunikationsgruppe öffnet eine weitere Liste, in der alle Teilnehmer der Kommunikationsgruppe angezeigt sind. Der Nutzer kann dann aus der Liste die Teilnehmer auswählen, an die er eine Positionsanfrage versenden will.

Nach der Auswahl sendet das Endgerät 10 durch Aktivieren des Nutzers eine Positionsanfrage an alle zuvor ausgewählten Endgeräte, im vorliegenden Fall hat der Nutzer lediglich das Endgerät 12 ausgewählt.

Das Endgerät 12 wurde zuvor in den Einstellungen ("Settings") so eingestellt, dass Positionsanfragen des Endgerätes 10 immer angenommen werden.

Sobald die Positionsanfrage des Endgerätes 10 vom Endgerät 12 erfasst wird und die GPS-Funktion im Endgerät 12 aktiviert ist, übermittelt das Endgerät 12 die von einem Satelliten 22 übermittelte geographische Position des Endgerätes 12 an das Endgerät 10. Die GPS-Funktion kann gegebenenfalls auch automatisch aktiviert werden, sobald eine Positionsanfrage beim Endgerät 12 eingeht.

Das Endgerät 10, dessen GPS-Funktion gleichfalls aktiviert ist, erfasst die vom Endgerät 12 übermittelte aktuelle geographische Position. Die aktuelle geographigeographische Position des Endgerätes 12 wird vom Prozessor des Endgerätes 10 mit dessen eigener aktueller geographischer Position verglichen und die relativen Positionen der beiden Endgeräte 10 und 12 in einer Datenbank zueinander bestimmt.

Im nächsten Schritt zeigt das Endgerät 10 auf seinem Touchscreen 14 in einem Entfernungsfeld 24 einen Entfernungswert zum anderen Endgerät 12 sowie in einer stilisierten Kompassrose einen Richtungspfeil 26 zur Angabe der Himmelsrichtung, in der das Endgerät 12 angeordnet ist, an.

Die im Touchscreen 14 angezeigten Positionsangaben werden nun in regelmäßigen zeitlichen Abständen jeweils aktualisiert, so dass der Nutzer des Endgerätes 10 den aktualisierten Positionsangaben folgen kann.

Bei dem erfindungsgemäßen Verfahren wird im Gegenzug auch die aktuelle geographische Position des anfragenden Endgerätes 10 an das angefragte Endgerät 12 übermittelt, dessen Prozessor seinerseits anhand der aktuellen geographischen Positionen der beiden Endgeräte 10 und 12 Positionsangaben berechnet und diese in gleicher Weise in Form einer relativen Entfernung und einer Himmelsrichtung im Touchscreen 14 des angefragten Endgerätes 12 einblendet.

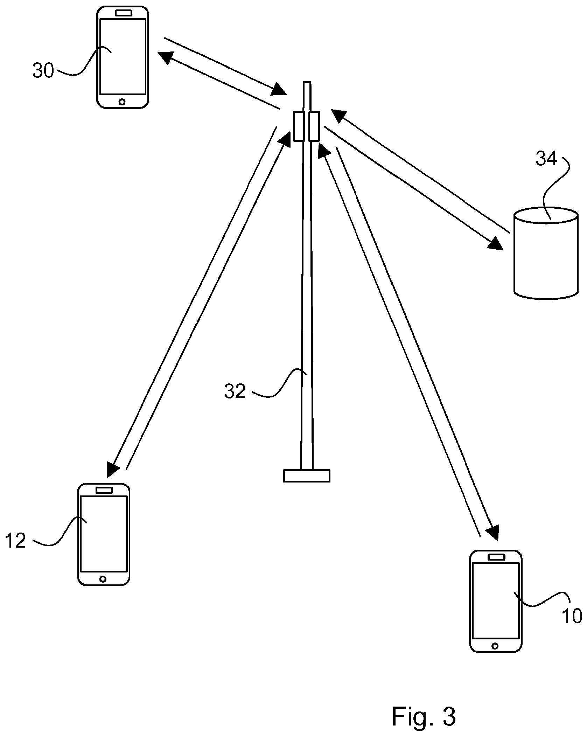

In Fig. 3 sind in schematischer Darstellung drei Endgeräte 10, 12 und 30 gezeigt, die über einen Mobilfunkmast 32 miteinander kommunizieren. Die geographischen Positionen der Endgeräte 10, 12 und 30 werden in herkömmlicher Weise mit Hilfe der Mobilfunkzellen ermittelt übermittelt.

Die drei Endgeräte 10, 12 und 30 sind in einer Datenbank 34 erfasst, in der die Endgeräte 10, 12 und 30 einer gemeinsamen Kommunikationsgruppe zugeordnet sind.

In einem ersten Schritt wählt nun der Nutzer des Endgerätes 10 mehrere Mitglieder der Kommunikationsgruppe durch Auswahl der den Endgeräten 10, 12 und 30 der Kommunikationsgruppe zugordneten Mobilfunknummern die Endgeräte 12 und 30 aus. Nach Auswahl der anzufragenden Endgeräte, im vorliegenden Fall nach Auswahl der Endgeräte 12 und 30 betätigt der Nutzer des Endgerätes 10 sendet der Nutzer die Positionsanfragen an die ausgewählten Endgeräte 12 und 30 ab.

Die Positionsanfragen werden an die Datenbank 34 weitergeleitet, in der nun die aktuellen geographischen Positionen, die von den Mobilfunkzellen erfasst sind, abgefragt werden.

Nachdem die geographischen Positionen der Endgeräte 10, 12 und 30 von der Datenbank 34 erfasst sind, berechnet diese die aktuellen relativen Positionen der Endgeräte 10, 12 und 30 zueinander und leitet an jedes Endgerät 10, 12 und 30 entsprechende relative Positionsangaben in Form von Entfernungen und Himmelsrichtungen weiter.

Die Nutzer der Endgeräte 10, 12 und 30 können nun in ihren Touchscreens ihrer Endgeräte 10, 12 und 30 die Entfernungsangaben und Himmelsrichtungen der anderen Endgeräte 10, 12 und 30 als Positionsangaben sehen. Auch hier werden die Positionsangaben kontinuierlich aktualisiert. Die Nutzer werden nun anhand der sich ständig aktualisierenden Positionsangaben zum gemeinsamen Treffpunkt geleitet.

Soll nun ein weiterer Nutzer eines weiteren Endgerätes (nicht dargestellt) in die Kommunikationsgruppe aufgenommen werden, kann jeder Nutzer mit Hilfe des Betätigungsfeldes 18 ("ADD+") einen weiteren Nutzer unter Angabe der Mobilfunknummer des neuen Gruppenmitgliedes aus der Datenbank auswählen.

### Bezugszeichenliste:

- 10: Endgerät
- 12: Endgerät
- 14: Touchscreen
- 16: Betätigungsfeld "Find"
- 18: Betätigungsfeld "ADD+"
- 20: Betätigungsfeld "Settings"
- 22: Satellit
- 24: Entfernungsfeld
- 26: Richtungspfeil

- 30: Endgerät
- 32: Mobilfunkmast
- 34: Datenbank

## Patentansprüche

1. Verfahren zum Bestimmen der relativen Positionen mindestens zweier über ein Mobilfunknetz miteinander kommunizierender mobiler Endgeräte, wie Mobiltelefone, Tablet-Computer, PDAs, Notebooks, Subnotebooks, oder ähnlicher mobiler Endgeräte, zueinander, bei dem
eine Positionsanfrage des einen mobilen Endgerätes (10) an das andere mobile Endgerät (12) übermittelt wird, wobei die Positionsanfrage des anfragenden mobilen Endgerätes (10) über das Mobilfunknetz (32) an das angefragte mobile Endgerät (12, 30) übermittelt wird,
nach Bestätigung der Positionsanfrage durch das angefragte mobile Endgerät (12) auf Basis der aktuellen geographischen Positionen der beiden mobilen Endgeräte (10, 12) die relativen Positionen der beiden mobilen Endgeräte (10, 12) zueinander bestimmt werden, indem die aktuellen geographischen Positionen der mobilen Endgeräte (10, 12, 30) an eine Datenbank (34) übermittelt werden, die Datenbank (34) die relativen Positionen auf Basis der aktuellen geographischen Positionen durch Algorithmen rechnerisch bestimmt und die relativen Positionen an das anfragende mobile Endgerät (10) und an das mindestens eine angefragte mobile Endgerät (12, 30) übermittelt werden,
auf Basis der relativen Positionen der mobilen Endgeräte (10, 12, 30) zueinander beim anfragenden mobilen Endgerät (10) als Positionsangabe eine relative Entfernung (24) in Form eines Entfernungswertes und eine geographische Richtung (26) zum angefragten mobilen Endgerät (12) und beim jeweils angefragten mobilen Endgerät (12, 30) eine Positionsangabe in Form einer relativen Entfernung (24) in Form eines Entfernungswertes und einer entgegengesetzten geographischen Richtung (26) zum anfragenden mobilen Endgerät (10) angegeben werden.

2. Verfahren nach Anspruch 1, bei dem die beiden mobilen Endgeräte (10, 12) mit mindestens einem weiteren mobilen Endgerät (30) in einer Datenbank (34) als gemeinsame Kommunikationsgruppe erfasst sind, der Nutzer des anfragenden mobilen Endgerätes (10) eines oder mehrere mobile Endgeräte (12, 30) aus der Kommunikationsgruppe zur gleichzeitigen Übermittlung von Positionsanfragen auswählen kann, nach Übermittlung der Positionsanfragen an alle ausgewählten mobilen Endgeräte (12, 30) für diejenigen Endgeräte (12, 30), bei denen die Nutzer die Positionsanfrage jeweils bestätigt haben, auf Basis der relativen Positionen der jeweils bestätigenden mobilen Endgeräte (12, 30) und dem anfragenden mobilen Endgerät (10) zueinander beim angefragten mobilen Endgerät (12) relative Entfernungen (24) und geographische Richtungen (26) zu jedem bestätigenden mobilen Endgerät (12, 30) angegeben wird.

3. Verfahren nach Anspruch 1 oder 2, bei dem bei jedem an der Positionsanfrage beteiligten mobilen Endgerät (12, 30), dessen Nutzer die Anfrage bestätigt hat, basierend auf den aktuellen geographischen Positionen jedes an der Positionsanfrage beteiligten mobilen Endgerätes (10, 12 30) die relativen Entfernungen (24) und geographischen Richtungen (26) der an der Positionsanfrage beteiligten mobilen Endgeräte (10, 12, 30) zueinander angezeigt werden.

4. Verfahren nach einem der Ansprüche 1 bis 3, bei dem die aktuellen geographischen Positionen der an der Positionsanfrage beteiligten mobilen Endgeräte (10, 12, 30) mit Hilfe eines GPS-Systems (22) und/oder mit Hilfe der Mobilfunkzellen des mindestens einen Mobilfunknetzbetreibers ermittelt werden.

5. Verfahren nach einem der vorhergehenden Ansprüche, bei dem die Positionsanfrage von dem Nutzer des jeweils angefragten mobilen Endgerätes (12, 30) abgelehnt werden kann.

6. Verfahren nach einem der vorhergehenden Ansprüche, bei dem in mindestens einer Datenbank die Endgeräte (10, 12, 30) aller Nutzer des Verfahrens gemeinsam mit jedem Endgerät (10, 12, 30) jeweils zugeordneten individuellen, nutzerbezogenen Datenbank erfasst sind, bei dem die Endgeräte (10, 12, 30) und/oder die Nutzer in der Datenbank individuellen Kommunikationsgruppen zugeordnet sind, welche von den Nutzern selbst und/oder von dem Betreiber der Datenbank gebildet werden und bei dem Positionsanfragen nur innerhalb der Kommunikationsgruppe zugelassen werden.

7. Verfahren nach Anspruch 6, bei dem auf jedem Endgerät (10, 12, 30) jedes Nutzers einer gemeinsamen Kommunikationsgruppe zu Beginn der Positionsanfrage alle Endgeräte (10, 12, 30) der Nutzer der gemeinsamen Kommunikationsgruppe zur Auswahl angezeigt werden, der Nutzer aus der angezeigten Kommunikationsgruppe die anzufragenden Endgeräte (10, 12, 30) und/oder Nutzer auswählt, und nach der Auswahl durch vorzugsweise einmaliges Auslösen an alle ausgewählten anzufragenden Endgeräte eine Positionsanfrage übermittelt wird.

8. Verfahren nach einem der Ansprüche 6 oder 7, bei dem neben der Positionsanfrage eine Kommunikationsfunktion vorgesehen ist, durch die die in der Datenbank, vorzugsweise in einer gemeinsamen Kommunikationsgruppe erfassten Endgeräte (10, 12, 30) zur Übertragung von Informationen, Textnachrichten, Bild-, Ton- und/oder Videodateien miteinander kommunizieren können.

## Claims

1. A method for determining the relative positions of at least two mobile terminal devices, such as mobile phones, tablet computers, PDAs, note-books, subnotebooks, or similar mobile terminal devices, to each other communicating with each other by means of a mobile communications network (32), in which
a position query of one mobile terminal device (10) is transmitted to the other mobile terminal device (12), wherein the position query of the querying mobile terminal device (10) is transmitted to the queried mobile terminal device (12, 30) by means of said mobile communications network (32)
the relative positions to each other of the two mobile terminal devices (10,12) are determined on the basis of the current geographic positions of the two mobile terminal devices (10, 12) after the queried mobile terminal device (12) confirms the position query, wherein
the current geographic positions of the mobile terminal devices (10, 12, 30) are transmitted to a database (34), the database (34) determines mathematically the relative positions based on the current geographic positions by using algorithms and transmits the relative positions to the querying mobile terminal device (10) and to the at least one queried mobile terminal device (12, 30),
based on the relative positions of the mobile terminal devices (10, 12, 30) to each other as a position indicator a relative distance (24) in form of a distance value and a geographic direction (26) to the queried mobile terminal device (10) is displayed in the querying mobile terminal device (10) and as a position indicator a relative distance (24) in the form of a distance value and an opposite geographical direction (26) to the querying mobile terminal device (10) is displayed in the respective queried mobile terminal device (12, 30).

2. The method according to claim 1, wherein the two mobile terminal devices (10, 12) are included with at least one further mobile terminal device (30) in a database (34) as a common communications group, the user of the querying mobile terminal device (10) can select one or more mobile terminal devices (12, 30) from the communications group for simultaneously transmitting position queries, and relative distances (24) and geographic directions (26) for each confirming mobile terminal device (12, 30) for which mobile device (12, 30) the users have confirmed the position queries are displayed at the queried mobile terminal device (12) after transmitting the position queries to all selected mobile terminal devices (12, 30) on the basis of the relative positions to each other of each confirming mobile terminal device (12, 30) and the querying mobile terminal device (10).

3. The method according to claim 1 or 2, wherein the relative distances (24) and geographic directions (26) of the mobile terminal devices (10, 12, 30) participating in the position query to each other are displayed at each of the mobile terminal devices (12, 30) participating in the position query for which the users thereof have confirmed the query, based on the current geographic positions of each of the mobile terminal devices (10, 12, 30) participating in the position query.

4. The method according to any one of the claims 1 through 3, wherein the current geographic positions of the mobile terminal devices (10, 12, 30) participating in the position query are determined by means of a GPS system (22) and/or by means of the mobile communications cells of at least one mobile communications network operator.

5. The method according to any one of the preceding claims, wherein the position query can be declined by the user of each queried mobile terminal device (12, 30).

6. The method according to any one of the preceding claims, wherein the terminal devices (10, 12, 30) of all users of the method are included in a database, together with an individual, user-related database associated with each terminal device (10, 12, 30), wherein the terminal devices (10, 12, 30) and/or the users are associated with individual communications groups in the database, formed by the users themselves and/or by the operator of the database, and wherein position queries are permitted only within the communications group.

7. The method according to claim 6, wherein all terminal devices (10, 12, 30) of the users of a common communications group are displayed for selection on each terminal device (10, 12, 30) of each user of the common communications group at the beginning of the position query, the user selects the terminal devices (10, 12, 30) and/or users to be queried from the displayed communications group, and after selecting a position query is transmitted to all selected terminal devices to be queried, preferably by a one-time trigger.

8. The method according to any one of the claims 6 or 7, wherein in addition to the position query, a communications function is provided, by means of which the terminal devices (10, 12, 30) included in the database, preferably in a common communications group, can communicate with each other for transferring information, text messages, image files, sound files, and/or video files.

## Revendications

1. Procédé de détermination des positions relatives d'au moins deux bornes terminales mobiles communiquant les unes avec les autres via un réseau de téléphonie mobile, tels des téléphones portables, des tablettes électroniques, des assistants numériques personnels, des ordinateurs portables, des ordinateurs ultra portables ou des bornes terminales mobiles similaires, dans lequel
une demande de position de la une borne terminale (10) mobile est transmise à l'autre borne terminale (12) mobile, où la demande de position de la borne terminale (10) mobile demandeuse est transmise à la borne terminale (12, 30) mobile demandée via le réseau de téléphonie (32) mobile,
après confirmation de la demande de position par la borne terminale (12) mobile demandée sur la base des positions géographiques en cours des deux bornes terminales (10, 12) mobiles, les positions relatives des deux bornes terminales (10, 12) mobiles sont déterminées l'une par rapport à l'autre en ce que les positions géographiques en cours des bornes terminales (10, 12, 30) mobiles sont transmises à une banque de données (34), la banque de données (34) détermine par voie de calcul au moyen d'algorithmes les positions relatives sur la base des positions géographiques en cours, et les positions relatives sont transmises à la borne terminale (10) mobile demandeuse et à la au moins une borne terminale (12, 30) mobile demandée,
sur la base des positions relatives des bornes terminales (10, 12, 30) mobiles les unes par rapport aux autres sont donnés du côté de la borne terminale (10) mobile demandeuse en tant qu'indication de position un éloignement (24) relatif sous la forme d'une valeur d'éloignement et une direction géographique (26) vers la borne terminale (12) mobile demandée, et du côté de la borne terminale (12, 30) mobile respectivement demandée une indication de position sous la forme d'un éloignement (24) relatif sous la forme d'une valeur d'éloignement et d'une direction géographique (26) opposée vers la borne terminale (10) mobile demandeuse.

2. Procédé selon la revendication 1, dans lequel les deux bornes terminales (10, 12) mobiles avec au moins une autre borne terminale (30) mobile sont saisies dans une banque de données (34) en tant que groupe de communication commun, l'utilisateur de la borne terminale (10) mobile demandeuse peut sélectionner l'une ou plusieurs des bornes terminales (12, 30) mobiles dans le groupe de communication pour une transmission simultanée de demandes de position, après transmission des demandes de position à toutes les bornes terminales (12, 30) mobiles sélectionnées pour les bornes terminales (12, 30) pour lesquelles les utilisateurs ont respectivement confirmé la demande de position, sur la base des positions relatives des bornes terminales (12, 30) mobiles respectivement confirmées et de la borne terminale (10) mobile demandeuse les unes par rapport aux autres sont donnés du côté de la borne terminale (12) mobile des éloignements (24) relatifs et des directions géographiques (26) vers chaque borne terminale (12, 30) mobile confirmée.

3. Procédé selon la revendication 1 ou 2, dans lequel du côté de chaque borne terminale (12, 30) mobile participant à la demande de position et dont l'utilisateur a confirmé la demande, sur la base des positions géographiques en cours de chaque borne terminale (10, 12, 30) mobile participant à la demande de position sont affichés les éloignements (24) relatifs et les directions géographiques (26) des bornes terminales (10, 12, 30) mobiles participant à la demande de position.

4. Procédé selon l'une des revendications 1 à 3, dans lequel les positions géographiques en cours des bornes terminales (10, 12, 30) mobiles participant à la demande de position sont établies à l'aide d'un système GPS (22) et/ou à l'aide des cellules de téléphonie mobile du au moins un opérateur de réseau de téléphonie mobile.

5. Procédé selon l'une des revendications précédentes, dans lequel la demande de position peut être refusée par l'utilisateur de la borne terminale (12, 30) mobile respectivement demandée.

6. Procédé selon l'une des revendications précédentes, dans lequel dans au moins une banque de données les bornes terminales (10, 12, 30) de tous les utilisateurs du procédé sont saisies conjointement avec une banque de données individuelle relative à l'utilisateur respectivement attribuée à chaque borne terminale (10, 12, 30), dans lequel les bornes terminales (10, 12, 30) et/ou les utilisateurs dans la banque de données sont attribués à des groupes de communication individuels, lesquels sont formés par les utilisateurs eux-mêmes et/ou par l'exploitant de la banque de données et lors des demandes de position sont autorisés uniquement à l'intérieur du groupe de communication.

7. Procédé selon la revendication 6, dans lequel sur chaque borne terminale (10, 12, 30) de chaque utilisateur d'un groupe de communication commun au début de la demande de position, toutes les bornes terminales (10, 12, 30) des utilisateurs du groupe de communication commun sont affichées à des fins de sélection, l'utilisateur issu du groupe de communication affiché sélectionne les bornes terminales (10, 12, 30) et/ou utilisateurs à demander, et après la sélection une demande de position est transmise de préférence par déclenchement unique à toutes les bornes terminales à demander sélectionnées.

8. Procédé selon l'une des revendications 6 ou 7, dans lequel à côté de la demande de position est prévue une fonction de communication par laquelle les bornes terminales (10, 12, 30) saisies dans la banque de données, de préférence dans un groupe de communication commun, peuvent communiquer les unes avec les autres pour la transmission d'informations, de messages textes, de données d'images et/ou de vidéo.
